# EUROPEAN PATENT SPECIFICATION

(11) **EP 4 261 055 B1**
(45) Date of publication and mention of the grant of the patent: **06.05.2026**
(21) Application number: 23166767.6
(22) Date of filing: 05.04.2023
(51) Int. Cl.: B60D 1/02

(54) **A DRAWBAR COUPLING SYSTEM**
ZUGSTANGENKOPPLUNGSSYSTEM
SYSTÈME DE COUPLAGE DE BARRE D'ATTELAGE

(30) Priority: 13.04.2022 DE 202022102013 U
(43) Date of publication of application: 18.10.2023
(73) Proprietor: Hyva Holding B.V., 2408 AK Alphen aan den Rijn (NL)
(72) Inventor: BIEMOND, Jacob, 2411 LH Bodegraven (NL); INVERARDI, Angelo, 2408 AK Alphen aan den Rijn (NL)
(74) Representative: Haseltine Lake Kempner LLP

(56) References cited:
- EP-A1- 1 253 027
- DE-U1- 9 405 462

## Description

The present invention relates to a drawbar coupling system and a vehicle comprising the drawbar coupling system.

Drawbar coupling systems typically comprise a pin which is configured to engage a drawbar to couple a trailer to a truck. These pins can usually be moved manually with a lever, but are ergonomically difficult to use.

It is known from EP 1 253 027 A1 to provide a device for opening trailer couplings.

It is known from DE 94 05 462 U1 to provide a device for disconnecting a trailer coupling.

According to a first aspect, there is provided a drawbar coupling system for coupling a drawbar to a vehicle, the drawbar coupling system comprising: a mount configured to fix the drawbar coupling system to a vehicle, and an actuation unit, the actuation unit comprising: a pin configured to move along a pin axis between a retracted position and an extended position; an engagement zone within which the pin is at least partially disposed in the extended position for engagement with a drawbar, wherein the pin is removed from the engagement zone when in the retracted position; a lever provided with a handle, the lever being configured to rotate through a travel between a first lever position and a second lever position, wherein the handle is closer to the mount in the first lever position than in the second lever position; and a transmission assembly configured to convert rotational movement of the lever from the first lever position to the second lever position into movement of the pin along the pin axis from the extended position to the retracted position.

The actuation unit of the drawbar coupling system may comprise a housing. The housing may be adjacent to the engagement zone, and may house the pin in the retracted position and/or partially house the pin in the extended position.

The transmission assembly comprises a first wheel fixed to the lever and a second wheel mechanically coupled to the pin. The first wheel is mechanically coupled to the second wheel throughout the travel of the lever to transfer opposing rotary motion from the first wheel to the second wheel.

The first wheel may have a first pitch diameter and the second wheel may have a second pitch diameter, and wherein the first pitch diameter may be equal to the second pitch diameter or smaller than the second pitch diameter.

The first wheel may be a first gear sector and the second wheel may be a second gear sector. The first gear sector may be configured to mesh with the second gear sector. The actuation unit may further comprise a stop at least partially disposed within an addendum circle of the first gear sector and configured to abut the first gear sector so as to limit the travel of the lever beyond the first lever position.

The transmission assembly further comprises a shaft which is mechanically coupled to the second wheel such that the pin is mechanically coupled to the second wheel via the shaft.

The shaft comprises a protrusion which is configured to be at least partially received within an internal recess of the second wheel such that the shaft and the second wheel are able to at least partially rotate relative to one another independently of one another. The transmission assembly is further configured so that when the lever is in the first position and the shaft is in a primary position corresponding to the pin being in the extended position, the shaft abuts a first end of the internal recess such that a rotation of the lever toward the second position drives the shaft towards a secondary position corresponding to the pin being in the retracted position. The transmission assembly is further configured so that when the lever is in the second position and the shaft is in the secondary position, the shaft and the second wheel are able to rotate independently such that the lever is able to be returned to the first position without the shaft being rotated towards the primary position. The transmission assembly is further configured so that when the lever is in the first position, the shaft and the second wheel are able to rotate independently such that the shaft is able to be rotated between the primary position and the secondary position without the lever being rotated between the first position and the second position.

The actuation unit may further comprise a biasing element configured to bias the pin to the extended position, and a holding mechanism configured to hold the pin in the retracted position when engaged so that the lever is able to return from the second position to the first position without moving the shaft or the pin. The holding mechanism may be configured to be selectively released so that the biasing element returns the pin to the extended position.

The transmission assembly may further comprise a lever biasing member configured to bias the lever toward the first lever position.

The actuation unit may further comprise an actuation assembly configured to drive the pin to move between the retracted position and the extended position; and a controller configured to control the actuation assembly based on a signal received from a user interface of the drawbar coupling system.

The actuation assembly may be configured to apply a force to the transmission assembly so as to drive the pin to move between the extended position and the retracted position.

The actuation assembly may be configured to apply a force to the shaft so as to drive the pin to move between the retracted position and the extended position.

The actuation assembly may comprise a pneumatic actuator.

The user interface may be a remote electronic device. The controller may be configured to receive the signal from the user interface via a wireless receiver.

According to a second aspect, there is provided a vehicle comprising the drawbar coupling system according to the first aspect.

Embodiments will now be described, by way of example only, with reference to the accompanying Figures, in which:
**Figure 1** schematically shows a vehicle comprising a drawbar coupling system;
**Figure 2** schematically shows a side view of an example drawbar coupling system;
**Figures 3a-3b** schematically show a side view and a top cutaway view respectively of an actuation unit of the example drawbar coupling system of Figure 2;
**Figure 3c** schematically shows a close-up cross-sectional view of the actuation unit of Figures 3a and 3b; and
**Figure 4** schematically shows a side sectional view of the drawbar coupling system of Figure 2 with a drawbar inserted into it.

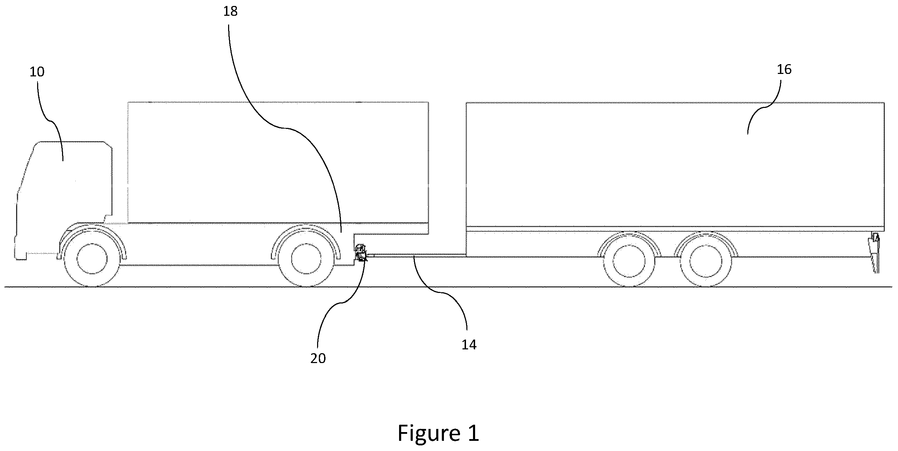

**Figure 1** shows a vehicle 10 comprising a drawbar coupling system 20. The drawbar coupling system 20 is fixed to a chassis 18 of the vehicle 10. The drawbar coupling system 20 is coupled to a drawbar 14 of a trailer 16, so that the drawbar 14 can pivot with respect to the chassis 18, through the drawbar coupling system 20, to permit pivoting movement of the trailer 16 with respect to the vehicle 10.

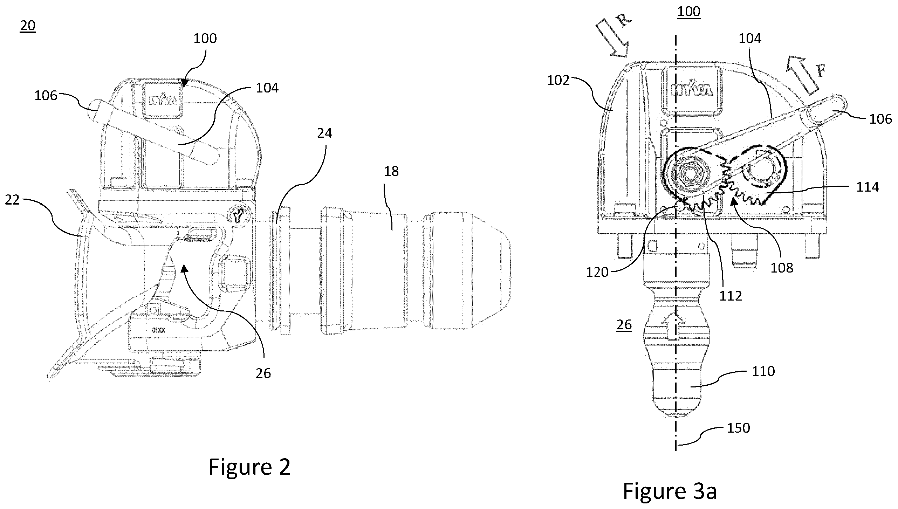

**Figure 2** shows a side view of the drawbar coupling system 20 fixed to the vehicle 10. The drawbar coupling system 20 comprises an actuation unit 100, a funnel 22, and a mount 24. The mount 24 is configured to fix the drawbar coupling system 20 to the chassis 18 of the vehicle 10. The funnel 22 is configured to guide an end of a drawbar 14 into a centre of the funnel 22, corresponding with an engagement zone 26 of the actuation unit 100, so that the drawbar 14 can be securely coupled to the drawbar coupling system 20. In other words, the funnel 22 is configured to guide a drawbar 14 into the engagement zone 26, when the drawbar 14 is inserted into the drawbar coupling system 20. In some examples, the drawbar coupling system may not comprise a funnel.

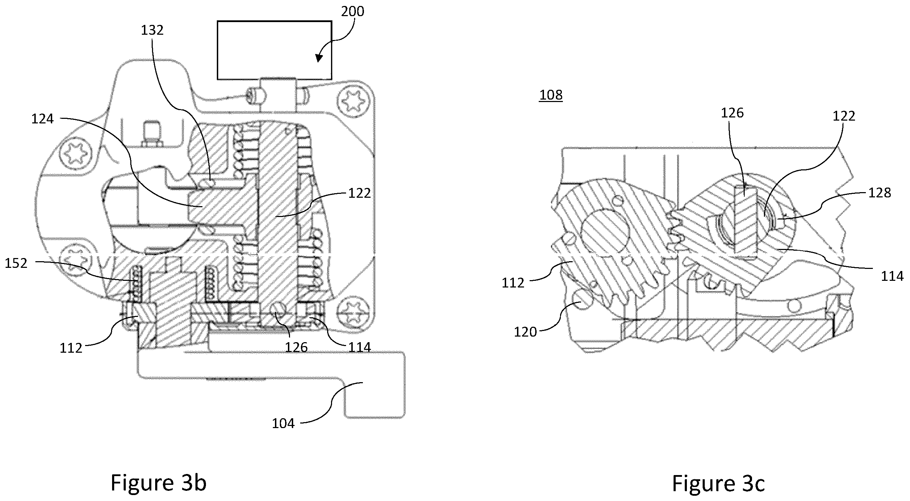

**Figure 3a** shows a side view of the actuation unit 100 and Figure 3b shows a cutaway top view of the actuation unit 100. The actuation unit 100 comprises a housing 102 (which is shown as transparent in Figure 3a so that some internal components can be seen) and a lever 104 on the outside of the housing 102 provided with a handle 106. In this example, the housing 102 is adjacent to the engagement zone 26. Figures 3a and 3b show the lever 104 in a first lever position and Figure 2 shows the lever 104 in a second lever position. The lever 104 is configured to rotate through a travel between the first lever position and the second lever position. The handle 106 is closer to the mount 24 (not shown in Figures 3a and 3b) in the first lever position than in the second lever position.

The actuation unit 100 comprises a pin 110 configured to move along a pin axis 150 between a retracted position and an extended position. In the retracted position, the pin 110 is mostly disposed in the housing 102, and in the extended position, the pin 110 is protruding from the housing 102 so that it is at least partially disposed in the engagement zone 26. When in the extended position, the pin 110 can be engaged with a drawbar 14 to couple the drawbar 14 to the drawbar coupling system 20. The pin 110 is fully removed from the engagement zone 26 when in the retracted position to permit a drawbar 14 to be inserted into, or removed from, the engagement zone 26. Figure 3a shows the pin 110 in the extended position.

The actuation unit 100 comprises a transmission assembly 108 configured to convert rotational movement of the lever 104 from the first lever position to the second lever position into movement of the pin 110 along the pin axis 150 from the extended position to the retracted position. Having the lever 104 in this position allows a more ergonomic use of the drawbar coupling system 20, since in use, a user can pull the lever 104 towards themselves, and away from the mount 24 of the drawbar coupling system 20 to pull the pin 110 upwards into the retracted position, rather than the user being required to push the lever. In this example, the housing 102 also provides a surface on which a user can place a counteracting hand to help with pulling the lever 104.

In this example, the transmission assembly 108 comprises a first gear sector 112 and a second gear sector 114. The first gear sector 112 is fixed to the lever 104 and the second gear sector 114 is mechanically coupled to the pin 110. The first gear sector 112 meshes with the second gear sector 114 such that the first gear sector 112 is mechanically coupled to the second gear sector 114 throughout the travel of the lever 104, to transfer opposing rotary motion from the first gear sector 112 to the second gear sector 114.

In other examples, the transmission assembly may comprise a first wheel and a second wheel instead of the gear sectors. The first wheel and the second wheel may be mechanically coupled in any suitable way to transfer opposing rotary motion from the first wheel to the second wheel, such as by gear teeth, or by a pulley.

In this example, the first gear sector 112 has a first pitch diameter and the second gear sector 114 has a second pitch diameter. In this example, the first pitch diameter and the second pitch diameter have a ratio of 8:9. Therefore, the first pitch diameter is smaller than the second pitch diameter such as to provide a mechanical advantage when turning the lever 104, for ease of use. In other examples, the first pitch diameter may be equal to or larger than the second pitch diameter.

The transmission assembly 108 further comprises a shaft 122 which is mechanically coupled to the second gear sector 114. The shaft 122 is configured to be mechanically coupled to the pin 110 of the drawbar coupling system 20 via a hook 124 such that the second gear sector 114 is mechanically coupled to the pin 110 in the drawbar coupling system 20.

**Figure 3c** shows a close-up cross-sectional view of the transmission assembly 108 including the first gear sector 112, the second gear sector 114 and the shaft 122.

The shaft 122 comprises a protrusion 126 (also shown in Figure 3b), which is at least partially received within an internal recess 128 of the second gear sector 114. The protrusion 126 of the shaft 122 is configured to abut an inner surface of the internal recess 128 at respective ends. In between the ends of the internal recess 128, the protrusion 126 (and therefore the shaft 122) can rotate freely relative to the second gear sector 114. Therefore, the second gear sector 114 and the shaft 122 are configured to at least partially rotate relative to one another, independently of each other.

When the pin 110 is coupled to the shaft 122, the shaft 122 (and therefore the protrusion 126) is able to rotate between a primary position corresponding to the pin 110 being in the extended position (as shown in Figures 3a-3c) and a secondary position corresponding to the pin 110 being in the retracted position (e.g., in this example, in the secondary position, the protrusion 126 is rotated clockwise with respect to the primary position shown in Figure 3c until the protrusion 126 abuts the opposing inner surface of the internal recess 128).

When the lever 104 is in the first position (as shown in Figures 3b and 3c) and the shaft 122 is in the primary position (as shown in Figure 3c), the protrusion 126 abuts a first end of the internal recess 128 such that movement of the lever 104 from the first position to the second position (which moves the first gear sector 112 in an anticlockwise direction from that shown in Figure 3c), the second gear sector 114 is forced to rotate in a clockwise direction from that shown in Figure 3c which drives the shaft 122 to rotate to the secondary position such that the pin 110 is moved to the retracted position. Due to the internal recess 128, when the lever 104 is in the second position and the shaft 122 is in the secondary position, the shaft 122 and the second gear sector 114 are able to rotate independently of one another, so that on returning the lever 104 to the first position, the shaft 122 is not driven to return to the primary position by interaction of the protrusion 126 with the second gear sector 114, and therefore, absent any other external force, the shaft 122 remains in the secondary position such that the pin 110 remains in the retracted position. The shaft 122 can therefore be rotated between the primary position and the secondary position without the lever 104 being rotated between the first position and the second position.

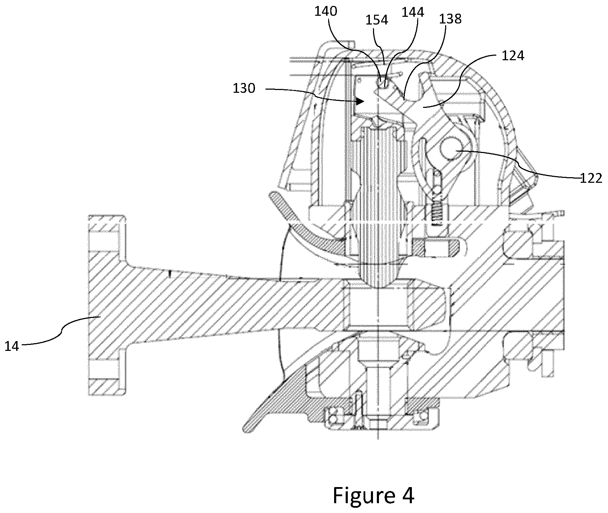

In this example, the hook 124 is biased to a position corresponding to the extended position of the pin 110 by a biasing element 132. In this example, the biasing element 132 is in the form of a spring which is coupled to the hook 124, and pushes the hook 124, to push the pin 110 to the extended position. Therefore, in this example, when the shaft 122 is in the secondary position and the lever 104 returns to the first position, a holding force must provide a counteracting force against the biasing force of the biasing element 132 to hold the pin 110 in the retracted position. In this example, this is achieved with a holding mechanism 130 (shown in Figure 4) which is configured to hold the pin 110 in the retracted position once it is engaged by movement of the lever 104 to the second position, and so that the lever 104 is able to return to the first position from the second position without moving the shaft 122 or the pin 110. The holding mechanism 130 is configured to be selectively released so that the biasing element 132 returns the pin 110 to the extended position.

**Figure 4** shows a cross-sectional view of the drawbar coupling system 20 with the pin 110 having been moved to the retracted position by the lever 104. In this example, the holding mechanism 130 comprises the hook 124 which is connected to the shaft 122, and a rod 140 on an end of the pin 110. The hook 124 is configured to rotate with the shaft 122, and engages with the rod 140 on a valley surface 138, to drive the pin 110 up from the extended position to the retracted position when the lever 104 is rotated to rotate the hook 124 in a clockwise direction to the position in which it is shown in Figure 4. The hook 124 is configured so that, at the retracted position, the rod 140 snaps into a seat 144 in the hook 124 so that the hook 124 cannot rotate back down, and therefore the pin 110 cannot return to the extended position. In the retracted position, a drawbar 14 can be inserted via the funnel 22 into the engagement zone 26.

It can be seen from Figure 4 that, in this example, in the retracted position, the pin 110 protrudes slightly out of the housing 102 of the actuation unit 100, so that, on entry to the engagement zone 26, the drawbar 14 abuts the pin 110 and pushes it further into the housing 102 from the retracted position. This small movement disengages the holding mechanism 130 (e.g., in this example, it pushes the rod 140 out of the seat 144 of the hook 124, thereby releasing the hook 124, and permits the pin 110 to return to the extended position by means of a second biasing element 154, which is configured to bias the pin 110 to the extended position, such that the rod 140 returns to the valley surface 138 of the hook 124.

Referring now to Figures 3a-3c, in this example, the transmission assembly 108 further comprises a lever biasing member 152 which is configured to bias the lever 104 towards the first lever position. Therefore, when the lever 104 is moved to the second lever position to move the pin 110 to the retracted position, the lever 104 will automatically return to the first lever position, and the pin 110 will remain in the retracted position until a drawbar 14 is inserted into the engagement zone 26, to disengage the holding mechanism 130.

In this example, the actuation unit 100 further comprises a stop 120 which is configured to limit the travel of the lever 104 beyond the first lever position (as shown in Figure 3a and 3c). In this example, the stop 120 is disposed within an addendum circle of the first gear sector 112 such that it abuts the first gear sector 112 when the lever 104 is in the first lever position. In other examples, the stop may be any suitable stop, or there may be no stop.

In this example, the actuation unit 100 further comprises an actuation assembly 200. The actuation assembly 200 is configured to drive the pin 110 to move between the retracted position and the extended position, independently of the lever 104. In this example, the actuation assembly 200 comprises a controller and a pneumatic actuator. The pneumatic actuator is configured to apply a force to the shaft 122 to drive the pin 110 to move between the extended position and the retracted position. The controller is configured to receive a signal from a user interface on a remote electronic device via a wireless receiver and to control the actuation assembly 200 based on the signal. In other examples, the user interface may not be remote, and may be connected to the controller with a wired connection.

In some examples the pneumatic actuator is configured to apply a force to any suitable part of the transmission assembly to move the pin. In other examples, the actuation assembly may comprise any suitable type of actuator, and the actuator may drive any suitable part of the drawbar coupling system to drive the pin between the extended position and the retracted position.

Use of a pneumatic actuator is advantageous because trucks which require drawbar coupling systems typically have a readily available supply of compressed air.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

There is disclosed a drawbar coupling system for coupling a drawbar to a vehicle, the drawbar coupling system comprising: a mount configured to fix the drawbar coupling system to a vehicle, and an actuation unit, the actuation unit comprising: a pin configured to move along a pin axis between a retracted position and an extended position; an engagement zone within which the pin is at least partially disposed in the extended position for engagement with a drawbar, wherein the pin is removed from the engagement zone when in the retracted position; a lever provided with a handle, the lever being configured to rotate through a travel between a first lever position and a second lever position, wherein the handle is closer to the mount in the first lever position than in the second lever position; and a transmission assembly configured to convert rotational movement of the lever from the first lever position to the second lever position into movement of the pin along the pin axis from the extended position to the retracted position.

## Claims

1. A drawbar coupling system (20) for coupling a drawbar to a vehicle, the drawbar coupling system comprising:
a mount (24) configured to fix the drawbar coupling system to a vehicle, and an actuation unit (100), the actuation unit comprising:
a pin (110) configured to move along a pin axis (150) between a retracted position and an extended position;
an engagement zone (26) within which the pin is at least partially disposed in the extended position for engagement with a drawbar (14), wherein the pin is removed from the engagement zone when in the retracted position;
a lever (104) provided with a handle (106), the lever being configured to rotate through a travel between a first lever position and a second lever position, wherein the handle is closer to the mount in the first lever position than in the second lever position; and
a transmission assembly (108) configured to convert rotational movement of the lever from the first lever position to the second lever position into movement of the pin along the pin axis from the extended position to the retracted position, **characterized in that** the transmission assembly comprises:
a first wheel fixed to the lever and a second wheel mechanically coupled to the pin, the first wheel being mechanically coupled to the second wheel throughout the travel of the lever to transfer opposing rotary motion from the first wheel to the second wheel; and
a shaft (122) which is mechanically coupled to the second wheel such that the pin is mechanically coupled to the second wheel via the shaft, wherein the shaft comprises a protrusion (126) which is configured to be at least partially received within an internal recess (128) of the second wheel such that the shaft and the second wheel are able to at least partially rotate relative to one another independently of one another;
and wherein the transmission assembly is further configured so that:
when the lever is in the first position and the shaft is in a primary position corresponding to the pin being in the extended position, the shaft abuts a first end of the internal recess such that a rotation of the lever toward the second position drives the shaft towards a secondary position corresponding to the pin being in the retracted position;
when the lever is in the second position and the shaft is in the secondary position, the shaft and the second wheel are able to rotate independently such that the lever is able to be returned to the first position without the shaft being rotated towards the primary position; and
when the lever is in the first position, the shaft and the second wheel are able to rotate independently such that the shaft is able to be rotated between the primary position and the secondary position without the lever being rotated between the first position and the second position.

2. The drawbar coupling system according to claim 1, wherein the first wheel has a first pitch diameter and the second wheel has a second pitch diameter, and wherein the first pitch diameter is equal to the second pitch diameter or smaller than the second pitch diameter.

3. The drawbar coupling system according to claim 2, wherein the first wheel is a first gear sector (112) and the second wheel is a second gear sector (114), and wherein the first gear sector is configured to mesh with the second gear sector.

4. The drawbar coupling system according to claim 3, wherein the actuation unit further comprises a stop (120) at least partially disposed within an addendum circle of the first gear sector and configured to abut the first gear sector so as to limit the travel of the lever beyond the first lever position.

5. The drawbar coupling system according to any preceding claim, wherein the actuation unit further comprises:
a biasing element (132) configured to bias the pin to the extended position, and
a holding mechanism (130) configured to hold the pin in the retracted position when engaged so that the lever is able to return from the second position to the first position without moving the shaft or the pin, wherein the holding mechanism is configured to be selectively released so that the biasing element returns the pin to the extended position.

6. The drawbar coupling system according to any preceding claim, wherein the transmission assembly further comprises a lever biasing member (152) configured to bias the lever toward the first lever position.

7. The drawbar coupling system according to any preceding claim, the actuation unit further comprising:
an actuation assembly (200) configured to drive the pin to move between the retracted position and the extended position; and
a controller configured to control the actuation assembly based on a signal received from a user interface of the drawbar coupling system.

8. The drawbar coupling system according to claim 7, wherein the actuation assembly is configured to apply a force to the transmission assembly so as to drive the pin to move between the extended position and the retracted position.

9. The drawbar coupling system according to claim 7 or claim 8, wherein the actuation assembly is configured to apply a force to the shaft so as to drive the pin to move between the retracted position and the extended position.

10. The drawbar coupling system according to any of claims 7-9, wherein the actuation assembly comprises a pneumatic actuator.

11. The drawbar coupling system according to any of claims 7-10, wherein the user interface is a remote electronic device, and wherein the controller is configured to receive the signal from the user interface via a wireless receiver.

12. A vehicle (10) comprising the drawbar coupling system according to any preceding claim.

## Patentansprüche

1. Zugstangenkopplungssystem (20) zum Koppeln einer Zugstange an ein Fahrzeug, wobei das Zugstangenkopplungssystem Folgendes umfasst:
eine Halterung (24), die dazu ausgelegt ist, das Zugstangenkopplungssystem an einem Fahrzeug zu befestigen, und eine Betätigungseinheit (100), wobei die Betätigungseinheit Folgendes umfasst:
einen Stift (110), der dazu ausgelegt ist, sich entlang einer Stiftachse (150) zwischen einer eingefahrenen Position und einer ausgefahrenen Position zu bewegen;
eine Eingriffszone (26), in der der Stift zum Eingriff mit einer Zugstange (14) zumindest teilweise in der ausgefahrenen Position angeordnet ist, wobei der Stift aus der Eingriffszone entfernt ist, wenn er sich in der eingefahrenen Position befindet;
einen Hebel (104), der mit einem Griff (106) versehen ist, wobei der Hebel dazu ausgelegt ist, sich um einen Weg zwischen einer ersten Hebelposition und einer zweiten Hebelposition zu drehen, wobei der Griff in der ersten Hebelposition näher an der Halterung als in der zweiten Hebelposition ist; und
eine Übertragungsanordnung (108), die dazu ausgelegt ist, eine Drehbewegung des Hebels von der ersten Hebelposition in die zweite Hebelposition in eine Bewegung des Stifts entlang der Stiftachse von der ausgefahrenen Position in die eingefahrene Position umzuwandeln, **dadurch gekennzeichnet, dass** die Übertragungsanordnung Folgendes umfasst:
ein erstes Rad, das an dem Hebel befestigt ist, und ein zweites Rad, das mechanisch mit dem Stift gekoppelt ist, wobei das erste Rad während der gesamten Bewegung des Hebels mechanisch mit dem zweiten Rad gekoppelt ist, um eine entgegengesetzte Drehbewegung von dem ersten Rad auf das zweite Rad zu übertragen; und
eine Welle (122), die mechanisch mit dem zweiten Rad gekoppelt ist, so dass der Stift über die Welle mechanisch mit dem zweiten Rad gekoppelt ist, wobei die Welle einen Vorsprung (126) umfasst, der dazu ausgelegt ist, zumindest teilweise in einer internen Aussparung (128) des zweiten Rades aufgenommen zu werden, so dass die Welle und das zweite Rad in der Lage sind, sich zumindest teilweise unabhängig voneinander relativ zueinander zu drehen;
und wobei die Übertragungsanordnung ferner so ausgelegt ist, dass:
wenn sich der Hebel in der ersten Position befindet und sich die Welle in einer primären Position befindet, die dem entspricht, dass sich der Stift in der ausgefahrenen Position befindet, die Welle an einem ersten Ende der inneren Aussparung anstößt, so dass eine Drehung des Hebels in Richtung der zweiten Position die Welle in Richtung einer sekundären Position antreibt, die dem entspricht, dass sich der Stift in der eingefahrenen Position befindet;
wenn sich der Hebel in der zweiten Position befindet und sich die Welle in der sekundären Position befindet, sich die Welle und das zweite Rad unabhängig drehen können, so dass der Hebel in die erste Position zurückgebracht werden kann, ohne dass die Welle in Richtung der primären Position gedreht wird; und
wenn sich der Hebel in der ersten Position befindet, sich die Welle und das zweite Rad unabhängig drehen können, so dass die Welle zwischen der primären Position und der sekundären Position gedreht werden kann, ohne dass der Hebel zwischen der ersten Position und der zweiten Position gedreht wird.

2. Zugstangenkopplungssystem nach Anspruch 1, wobei das erste Rad einen ersten Teilkreisdurchmesser aufweist und das zweite Rad einen zweiten Teilkreisdurchmesser aufweist und wobei der erste Teilkreisdurchmesser gleich dem zweiten Teilkreisdurchmesser oder kleiner als der zweite Teilkreisdurchmesser ist.

3. Zugstangenkopplungssystem nach Anspruch 2, wobei das erste Rad ein erster Zahnradsektor (112) ist und das zweite Rad ein zweiter Zahnradsektor (114) ist und wobei der erste Zahnradsektor dazu ausgelegt ist, mit dem zweiten Zahnradsektor in Eingriff zu kommen.

4. Zugstangenkopplungssystem nach Anspruch 3, wobei die Betätigungseinheit ferner einen Anschlag (120) umfasst, der zumindest teilweise innerhalb eines Zusatzkreises des ersten Zahnradsektors angeordnet und dazu konfiguriert ist, an dem ersten Zahnradsektor anzuliegen, um die Bewegung des Hebels über die erste Hebelposition hinaus zu begrenzen.

5. Zugstangenkopplungssystem nach einem der vorhergehenden Ansprüche, wobei die Betätigungseinheit ferner Folgendes umfasst:
ein Vorspannelement (132), das dazu ausgelegt ist, den Stift in die ausgefahrene Position vorzuspannen, und
einen Haltemechanismus (130), der dazu ausgelegt ist, den Stift in der eingefahrenen Position zu halten, wenn er in Eingriff steht, so dass der Hebel in der Lage ist, aus der zweiten Position in die erste Position zurückzukehren, ohne die Welle oder den Stift zu bewegen, wobei der Haltemechanismus dazu ausgelegt ist, gezielt gelöst zu werden, so dass das Vorspannelement den Stift in die ausgefahrene Position zurückbringt.

6. Zugstangenkopplungssystem nach einem der vorhergehenden Ansprüche, wobei die Übertragungsanordnung ferner ein Hebelvorspannelement (152) umfasst, das dazu ausgelegt ist, den Hebel in Richtung der ersten Hebelposition vorzuspannen.

7. Zugstangenkopplungssystem nach einem der vorhergehenden Ansprüche, wobei die Betätigungseinheit ferner Folgendes umfasst:
eine Betätigungsanordnung (200), die dazu ausgelegt ist, den Stift anzutreiben, um sich zwischen der eingefahrenen Position und der ausgefahrenen Position zu bewegen; und
eine Steuerung, die dazu ausgelegt ist, die Betätigungsanordnung basierend auf einem Signal zu steuern, das von einer Benutzerschnittstelle des Zugstangenkopplungssystems empfangen wird.

8. Zugstangenkopplungssystem nach Anspruch 7, wobei die Betätigungsanordnung dazu ausgelegt ist, eine Kraft auf die Übertragungsanordnung auszuüben, um den Stift anzutreiben, um sich zwischen der ausgefahrenen Position und der eingefahrenen Position zu bewegen.

9. Zugstangenkopplungssystem nach Anspruch 7 oder Anspruch 8, wobei die Betätigungsanordnung dazu ausgelegt ist, eine Kraft auf die Welle auszuüben, um den Stift anzutreiben, um sich zwischen der eingefahrenen Position und der ausgefahrenen Position zu bewegen.

10. Zugstangenkopplungssystem nach einem der Ansprüche 7-9, wobei die Betätigungsanordnung einen pneumatischen Aktuator umfasst.

11. Zugstangenkopplungssystem nach einem der Ansprüche 7-10, wobei die Benutzerschnittstelle eine entfernte elektronische Vorrichtung ist und wobei die Steuerung dazu ausgelegt ist, das Signal von der Benutzerschnittstelle über einen drahtlosen Empfänger zu empfangen.

12. Fahrzeug (10), umfassend das Zugstangenkopplungssystem nach einem der vorhergehenden Ansprüche.

## Revendications

1. Système d'accouplement de barre d'attelage (20) pour accrocher une barre d'attelage à un véhicule, le système d'accouplement de barre d'attelage comprenant :
une monture (24) conçue pour fixer le système d'accouplement de barre d'attelage à un véhicule et une unité d'actionnement (100), l'unité d'actionnement comportant :
une broche (110) conçue pour se déplacer le long d'un axe de broche (150) entre une position rétractée et une position déployée ;
une zone d'engagement (26) dans laquelle la broche est au moins partiellement disposée dans la position déployée pour s'engager avec une barre d'attelage (14), dans laquelle la broche est retirée de la zone d'engagement dans la position rétractée ;
un levier (104) pourvu d'une poignée (106), le levier étant conçu pour tourner sur une course entre une première position de levier et une seconde position de levier, la poignée étant plus proche de la monture dans la première position de levier que dans la seconde position de levier ; et
un ensemble de transmission (108) conçu pour transformer un déplacement rotatif du levier de la première position de levier à la seconde position de levier en déplacement de la broche le long de l'axe de broche de la position déployée à la position rétractée, **caractérisé en ce que** l'ensemble de transmission comprend :
une première roue fixée au levier et une seconde roue couplée mécaniquement à la broche, la première roue étant couplée mécaniquement à la seconde roue pendant toute la course du levier pour transférer un mouvement rotatif opposé de la première roue à la seconde roue ; et
un arbre (122) couplé mécaniquement à la seconde roue de telle sorte que la broche est couplée mécaniquement à la seconde roue par l'intermédiaire de l'arbre, l'arbre comprenant une saillie (126) conçue pour être reçue au moins partiellement dans un évidement interne (128) de la seconde roue de telle sorte que l'arbre et la seconde roue sont mobiles en rotation au moins partiellement l'un par rapport à l'autre indépendamment l'un de l'autre ;
et dans lequel l'ensemble de transmission est en outre conçu de telle sorte que :
lorsque le levier est dans la première position et que l'arbre est dans une position primaire correspondant à la position déployée de la broche, l'arbre bute contre une première extrémité de l'évidement interne de telle sorte qu'une rotation du levier vers la seconde position entraîne l'arbre vers une position secondaire correspondant à la position rétractée de la broche ;
lorsque le levier est dans la seconde position et que l'arbre est dans la position secondaire, l'arbre et la seconde roue sont indépendamment mobiles en rotation de telle sorte que le levier peut être ramené dans la première position sans que l'arbre soit tourné vers la position primaire ; et
lorsque le levier est dans la première position, l'arbre et la seconde roue peuvent tourner indépendamment de telle sorte que l'arbre peut être tourné entre la position primaire et la position secondaire sans que le levier soit tourné entre la première position et la seconde position.

2. Système d'accouplement de barre d'attelage selon la revendication 1, dans lequel la première roue a un premier diamètre primitif et la seconde roue a un second diamètre primitif, et dans lequel le premier diamètre primitif est égal au second diamètre primitif ou inférieur au second diamètre primitif.

3. Système d'accouplement de barre d'attelage selon la revendication 2, dans lequel la première roue est un premier secteur denté (112) et la seconde roue est un second secteur denté (114), et dans lequel le premier secteur denté est conçu pour s'engrener avec le second secteur denté.

4. Système d'accouplement de barre d'attelage selon la revendication 3, dans lequel l'unité d'actionnement comprend en outre une butée (120) disposée au moins partiellement à l'intérieur d'un cercle de tête du premier secteur denté et conçue pour buter contre le premier secteur denté de manière à limiter la course du levier au-delà de la première position de levier.

5. Système d'accouplement de barre d'attelage selon l'une quelconque des revendications précédentes, dans lequel l'unité d'actionnement comprend en outre :
un élément de sollicitation (132) conçu pour solliciter la broche vers la position déployée, et
un mécanisme de maintien (130) conçu pour maintenir la broche en position rétractée lorsqu'elle est engagée de telle sorte que le levier peut revenir de la seconde position à la première position sans déplacer l'arbre ou la broche, le mécanisme de maintien étant conçu pour être libéré de façon sélective de telle sorte que l'élément de sollicitation ramène la broche dans la position déployée.

6. Système d'accouplement de barre d'attelage selon l'une quelconque des revendications précédentes, dans lequel l'ensemble de transmission comprend en outre un élément de sollicitation de levier (152) conçu pour solliciter le levier vers la première position de levier.

7. Système d'accouplement de barre d'attelage selon l'une quelconque des revendications précédentes, l'unité d'actionnement comprenant en outre :
un ensemble d'actionnement (200) conçu pour entraîner la broche à se déplacer entre la position rétractée et la position déployée ; et
un contrôleur configuré pour commander l'ensemble d'actionnement sur la base d'un signal reçu depuis une interface utilisateur du système d'accouplement de barre d'attelage.

8. Système d'accouplement de barre d'attelage selon la revendication 7, dans lequel l'ensemble d'actionnement est conçu pour appliquer une force à l'ensemble de transmission de manière à entraîner la broche en déplacement entre la position déployée et la position rétractée.

9. Système d'accouplement de barre d'attelage selon la revendication 7 ou la revendication 8, dans lequel l'ensemble d'actionnement est conçu pour appliquer une force à l'arbre de manière à entraîner la broche en déplacement entre la position rétractée et la position déployée.

10. Système d'accouplement de barre d'attelage selon l'une quelconque des revendications 7 à 9, dans lequel l'ensemble d'actionnement comprend un actionneur pneumatique.

11. Système d'accouplement de barre d'attelage selon l'une quelconque des revendications 7 à 10, dans lequel l'interface utilisateur est un dispositif électronique distant, et dans lequel le contrôleur est configuré pour recevoir le signal de l'interface utilisateur par l'intermédiaire d'un récepteur sans fil.

12. Véhicule (10) comprenant le système d'accouplement de barre d'attelage selon l'une quelconque des revendications précédentes.
